# EUROPEAN PATENT APPLICATION

(11) **EP 4 835 603 A1**
(43) Date of publication of application: **04.11.2026**
(21) Application number: 25178337.9
(22) Date of filing: 22.05.2025
(51) Int. Cl.: G05D 1/686, G05D 1/247, H04W 4/00, B64U 10/00, G05D 109/25, G05D 111/10, G05D 111/30

(54) **WIRELESS TARGET FOLLOWING SYSTEM AND UNMANNED AERIAL VEHICLE USING SUCH SYSTEM**

(30) Priority: 20.01.2025 CN 202520131066 U
(71) Applicant: Guangdong Syma Model Aircraft Industrial Co., Ltd., Shantou, Guangdong 515800 (CN)
(72) Inventor: HUANG, Zebin, Shantou, 515800 (CN)
(74) Representative: Metida

(57) **Abstract**

The present invention relates to a wireless following system for an unmanned aerial vehicle.
The wireless following system includes a wireless receiver and a wireless transmitter and further includes a signal guide member for limiting a received signal range of the wireless receiver. The signal guide member is arranged on a front side of the wireless receiver and is provided with a signal guide channel. An inner opening of the signal guide channel faces the wireless receiver, and an outer opening of the signal guide channel faces outside; or/and, a transmitting terminal of the wireless transmitter is connected to a signal limiting member for limiting a wireless signal transmitting range.
The wireless receiver is installed on the unmanned aerial vehicle whereas the wireless transmitter is carried by a user.
The following system is adapted to acquire a position change of the wireless transmitter accurately, so as to adjust a posture of the unmanned aerial vehicle.

## Description

### Technical Field

The present invention relates to the technical field of unmanned aerial vehicles, and in particular to a wireless following device and an unmanned aerial vehicle.

### Background

The use of an unmanned aerial vehicle is increasingly popular. At present, many people carry the unmanned aerial vehicle to observe the surrounding environmental trend. When the unmanned aerial vehicle is used, a following system may be used to accompany the movement of a user without special operations. The following system usually uses one wireless transmitter and one wireless receiver. The user carries the wireless transmitter, and the unmanned aerial vehicle is provided with the wireless receiver. When the user moves, the wireless receiver transmits a received wireless signal to a control system. The control system follows a fluctuation of the intensity of the wireless signal to determine the positioning of the user, so as to control the unmanned aerial vehicle to accompany with the user, thereby achieving following by the unmanned aerial vehicle.

During use, if the user moves to turn for a short distance, the unmanned aerial vehicle will not follow to turn, and the user needs to move for a certain distance, or the user controls the unmanned aerial vehicle through a controller, so that the unmanned aerial vehicle can turn. This brings unpleasant sensory experience to the user.

### Summary

To overcome defects in the prior art, an objective of the present invention is to provide a wireless following device capable of following to turn more accurately, and the wireless following device is convenient to use.

Another objective of the present invention is to provide an unmanned aerial vehicle, which is provided with the above wireless following device.

A wireless following device includes a wireless receiver and a wireless transmitter and further includes a signal guide member for limiting a received signal range of the wireless receiver. The signal guide member is arranged on a front side of the wireless receiver and is provided with a signal guide channel. An inner opening of the signal guide channel faces the wireless receiver, and an outer opening of the signal guide channel faces outside; or/and, a transmitting terminal of the wireless transmitter is connected to a signal limiting member for limiting a wireless signal transmitting range.

Further, the wireless following device includes at least two wireless receivers and at least two corresponding signal guide members.

Further, an outer opening of the signal guide member is horn-shaped or inversely conical.

Further, the wireless receiver is an infrared receiver.

Further, the wireless transmitter is an infrared transmitter, the signal limiting member is a casing pipe, and the casing pipe is sleeved at the transmitting terminal. Preferably, an upper opening of the casing pipe is horn-shaped or conical. Further preferably, the casing pipe is black.

An unmanned aerial vehicle includes the above wireless following device.

Further, the unmanned aerial vehicle includes a body, where the body includes a housing, the wireless receiver and the signal guide member are arranged in the housing, the housing is provided with a through hole matching the outer opening of the signal guide channel, and the outer openings of two adjacent signal guide channels are arranged at an included angle in a length direction.

Further, the included angle is 10 degrees to 75 degrees, preferably, 20 degrees, 30 degrees, and 45 degrees.

Further, when two or more than two signal guide members are provided, a connector is connected between adjacent signal guide members.

Preferably, the housing is provided with an auxiliary fixing member, the auxiliary fixing member is provided with an accommodation hole for accommodating a signal receiver, and an inner end of the signal guide channel faces the accommodation hole or stretches into the accommodation hole.

Preferably, the connector is provided with an extension rod, the auxiliary fixing member is provided with an insertion hole matching the extension rod, and the extension rod is inserted into the insertion hole.

The present invention has the following beneficial effects: by additionally arranging the signal guide member and the signal limiting member based on the prior art, a following system of the unmanned aerial vehicle can acquire a position change of the wireless transmitter accurately, so as to adjust a posture of the unmanned aerial vehicle. The wireless following device is convenient to use.

### Brief Description of Figures

FIG. 1 is a schematic structural diagram of an unmanned aerial vehicle in an embodiment.
FIG. 2 is a schematic structural diagram of an opened shell of an unmanned aerial vehicle.
FIG. 3 is a schematic structural diagram of a signal guide member, a wireless receiver, and an auxiliary fixing member.
FIG. 4 is a schematic structural diagram of FIG. 3 at another viewing angle, where an angle A is an included angle between two adjacent signal guide channels.
FIG. 5 is an exploded view of FIG. 3.
FIG. 6 is a schematic structural diagram of a wireless transmitter in the present embodiment.
FIG. 7 is a schematic diagram of a partially opened shell of a wireless transmitter.

### Numeral reference:

1-body; 3-signal guide member; 4-connector; 5-auxiliary fixing member; 6-wireless receiver; 7-wireless transmitter;
11-housing; 12-through hole; 31-signal guide channel; 311-inner opening; 312-outer opening; 71-shell; 72-infrared diode; 73-signal limiting member; 41-extension rod; 51-accommodation hole; 52-insertion hole.la

### Detailed Description

To make the technical problems to be solved, technical solutions, and beneficial effects of the present application clearer, the present application will be further described in detail below in conjunction with drawings and embodiments. It is to be understood that specific embodiments described herein are only adopted to explain the present application and not intended to limit the present application.

It should be noted that when an element is referred to as being "fixed" or "arranged" on another element, the element may be directly on another element or indirectly on another element. When an element is referred to as being "connected" to another element, the element may be directly connected to another element or indirectly connected to another element.

It should be understood that orientation or position relationships indicated by the terms such as "transverse", "length", "width", "up", "down", "front", "back", "left", "right", "vertical", "horizontal", "top", "bottom", "inside", and "outside" are based on orientation or position relationships shown in the accompanying drawings, and are intended to facilitate the description of the present invention and simplify the description only, rather than indicating or implying that the mentioned apparatus or element must have a particular orientation or must be constructed and operated in a particular orientation. Therefore, such terms should not be construed as limiting of the present invention.

In addition, the terms "first" and "second" are used merely for the purpose of description, and should not be construed as indicating or implying relative importance or implying a quantity of indicated technical features. Therefore, a feature limited by "first" or "second" may explicitly or implicitly include one or more of the features. In the description of the present invention, "a plurality of" means two or more, unless otherwise explicitly defined.

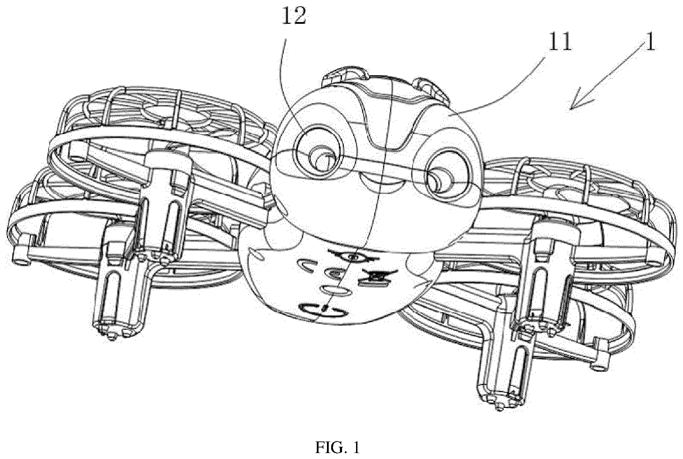

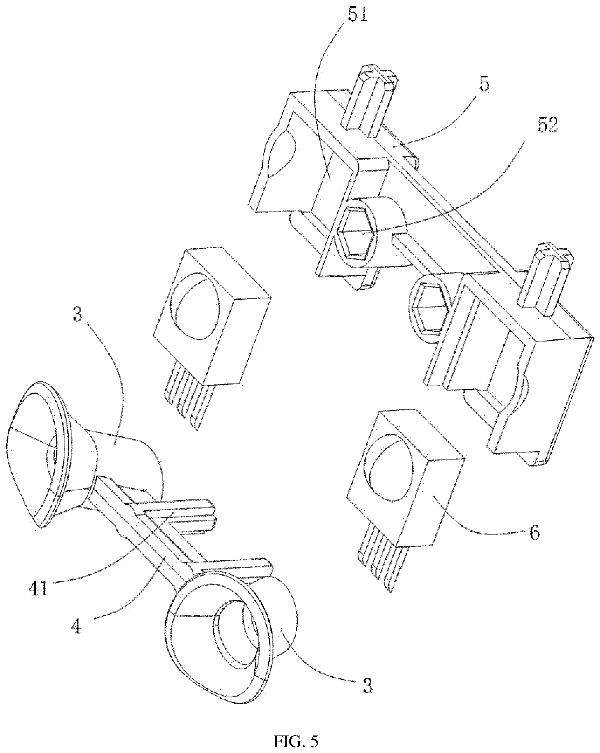

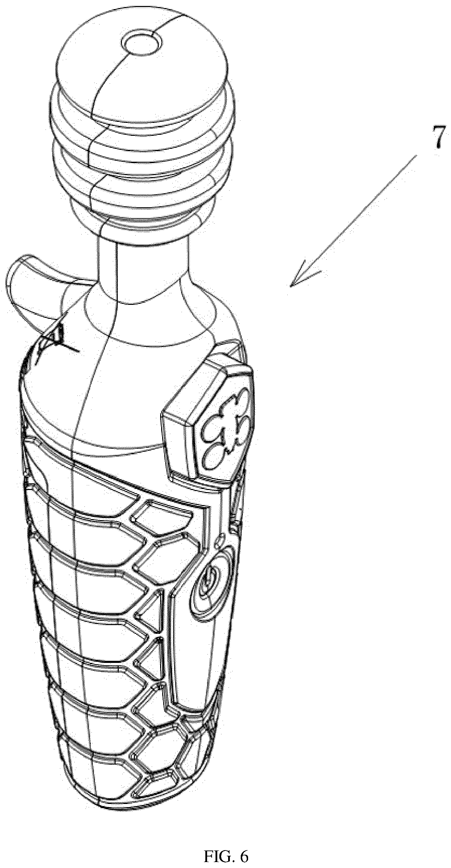

The present invention will be described in detail below in conjunction with drawings. As shown in FIG. 1 to FIG. 7.

Embodiment 1: referring to FIG. 1, FIG. 2, FIG. 3, FIG. 6, and FIG. 7, a wireless following device includes a wireless receiver 6 and a wireless transmitter 7, and further includes a signal guide member 3 for limiting a received signal range of the wireless receiver 6, where the signal guide member 3 is arranged on a front side of the wireless receiver 6, the signal guide member 3 is provided with a signal guide channel 31, an inner opening 311 of the signal guide channel 31 faces the wireless receiver 6, and an outer opening 312 of the signal guide channel 31 faces outside; or/and a transmitting terminal of the wireless transmitter 7 is connected to a signal limiting member 73 for limiting a wireless signal transmitting range.

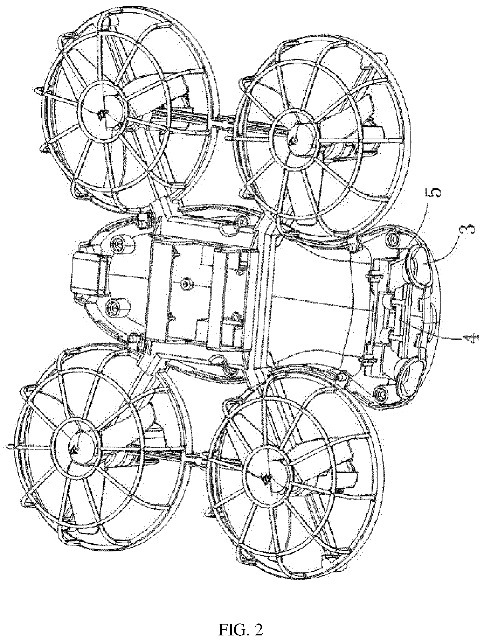

Compared with the prior art, in the technical solution, the signal guide member 3 or/and the signal limiting member 73 is additionally arranged. The signal guide member 3 limits a signal receiving range. During specific implementation, the signal guide member 3 and the wireless receiver 6 are together arranged on the unmanned aerial vehicle, as shown in FIG. 2. The outer opening 312 of the signal guide channel 31 of the signal guide member 3 faces forward, and an operator carries the wireless transmitter 7. When the unmanned aerial vehicle is lifted off, the operator is located on the lower front side of the unmanned aerial vehicle and is located in an extended region of the outer opening 312 of the signal guide channel 31. When the operator moves or turns for a short distance, since the extension region is relatively small, the perception on the intensity of the signal is also relatively significant. In a specific arrangement, the extended region may be arranged as a surrounding 0.5 m-1 m range taking the operator as a center of a circle. When a moving distance of the wireless transmitter 7 carried by the operator exceeds 0.5 m-1 m, the intensity of the signal received by a wireless signal receiver will change greatly. It may be understood that the extended region is relevant to an ascending height of the unmanned aerial vehicle. The ascending height may be set as 2 m-5 m. The corresponding extended region corresponds to a circle with a radius of 0.5 m-2.5 m. The operator may hold the wireless signal transmitter and carry the wireless signal transmitter to move about 0.3 m-0.6 m by way of a turning step or a short-distance turn, which may sufficiently affect the intensity of the signal received by the wireless signal receiver.

It may be seen that based on the prior art, a signal guide member 3 for limiting signal reception is additionally arranged on the front side of the wireless receiver 6 to improve the intensity change of the signal received by the wireless signal receiver, so as to assist a control system of the unmanned aerial vehicle to accurately determine the turn of the operator, thereby improving the sensory experience of a user.

The signal transmitting range of the current wireless transmitter 7 is quite large regardless of Bluetooth, infrared rays, and WiFi. During use, the operator carries the wireless transmitter 7 to walk or turn in the extended region, the intensity of the signal received by the signal receiver on the unmanned aerial vehicle changes a little, and the unmanned aerial vehicle usually does not perform corresponding actions, such as turning. To further improve the ability of the wireless receiver 6 to sense the intensity of the received signal, in this embodiment, the existing wireless transmitter 7 is improved, and a signal limiting member 73 is additionally arranged; by arranging the signal limiting member 73, the signal transmitted by the wireless transmitter 7 is higher in directivity, for example, the signal is transmitted outward in a cone shape with a cone angle of 30 degrees, so that the signal transmitted by the wireless transmitter 7 has a quite small receiving range at the height of the unmanned aerial vehicle, and therefore, the wireless transmitter 7 moves for a small distance such as 0.5 m-1 m to affect the intensity of the signal received by the wireless receiver 6. The control system immediately determines the moving direction and position and controls the unmanned aerial vehicle to make corresponding posture adjustment or movement.

The signal guide member 3 limits the receiving range of the wireless receiver 6 and the signal limiting member 73 limits the transmitting range of the wireless transmitter 7, which may improve the ability of the wireless receiver 6 to sense the intensity of the received signal, respectively. Therefore, during the arrangement, the arrangement may be performed as needed. For example, the signal guide member 3 or the signal limiting member 73 is only arranged, or both the signal guide member 3 and the signal limiting member 73 may be arranged.

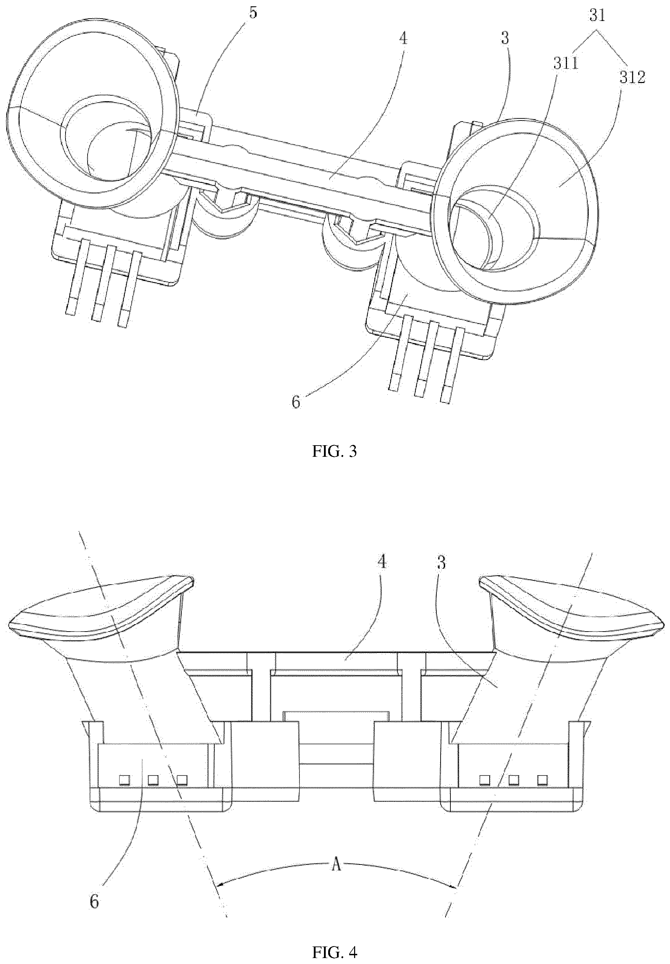

Referring to FIG. 2 and FIG. 3, the wireless following device includes at least two wireless receivers 6 and at least two corresponding signal guide members 3.

When two or more than two wireless receivers 6 and corresponding signal guide members 3 are arranged, the regional ranges of different signal guide members 3 that receive the signal are different: 1, if the regional ranges are not intersected, when the movement or turn of the operator drives the wireless transmitter 7 to move from one regional range to another regional range or the signal intensity in one region changes, after the control system of the unmanned aerial vehicle senses the movement or turn and the change, the unmanned aerial vehicle adjusts the posture immediately; and 2, if the regional ranges are intersected, the intersected region will be usually arranged in the region where the wireless transmitter 7 is located, i.e., the unmanned aerial vehicle will follow in places where the at least two or more than two wireless receivers 6 can receive the signal; the intersected range will be arranged very small, and in this case, the movement or turn of the operator drives the wireless transmitter 7 to move from the intersected regional range to an independent extended regional range, and after the control system of the unmanned aerial vehicle senses the movement or turn, the unmanned aerial vehicle adjusts the posture immediately. During adjustment, posture adjustment at 90 degrees and 180 degrees is usually performed, and manual operations are needed for other angles.

In addition, it may be understood that during the specific arrangement, two wireless receivers 6 may be arranged on the left and right sides, i.e., both sides of a walking direction, and the two extended regions correspond to both sides of the walking direction. The unmanned aerial vehicle will turn left and right quite sensitively. Front and back turns may be adjusted by sensing the movement of a signal source. At present, left and right turn adjustment is mainly made on the unmanned aerial vehicle.

Referring to FIG. 3, FIG. 4, and FIG. 5, the outer opening 312 of the signal guide member 3 is horn-shaped or inversely conical.

Since the current unmanned aerial vehicle toy is small in size and the extended regional range much larger than a projection area of the unmanned aerial vehicle toy, to obtain a larger extended regional range, it is needed to arrange the outer opening 312 of the signal guide member 3 in a reamed hole shape. In this embodiment, an outer opening of the signal guide member is horn-shaped or inversely conical.

Then, the wireless receiver 6 is an infrared receiver.

The wireless receiver 6 is limited to the infrared receiver, and the corresponding wireless transmitter 7 is limited to an infrared transmitter. Compared with other wireless signals, the direction of the infrared signal is better and convenient to adjust.

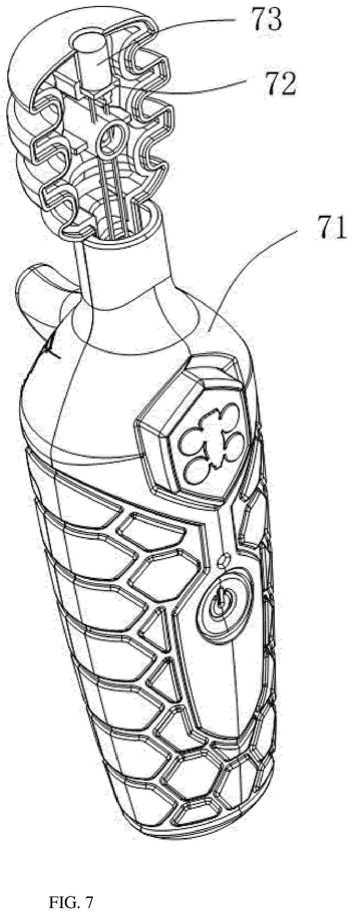

Referring to FIG. 7, the wireless transmitter 7 is an infrared transmitter, the signal limiting member 73 is a casing pipe, and the casing pipe is sleeved at a transmitting terminal. Preferably, an upper opening of the casing pipe is horn-shaped or conical. Further preferably, the casing pipe is black.

By arranging the casing pipe as the signal limiting member 73 of the infrared signal, the overall structure is simple; second, a transmitting angle of the wireless signal is defined by the upper opening of the casing pipe; and further, to avoid the use of a transparent or semi-transparent material which causes leakage of the infrared signal, the casing pipe may be in a dark color such as black. The infrared transmitter includes a shell 71, the shell 71 is internally provided with an infrared circuit and an infrared diode 72, the casing pipe is sleeved outside the infrared diode 72, and the infrared diode 72 is the transmitting terminal.

Embodiment 2: An unmanned aerial vehicle includes the above wireless following device.

Referring to FIG. 1 and FIG. 2, the unmanned aerial vehicle includes a body 1, where the body 1 includes a housing 11, the wireless receiver 6 and the signal guide member are arranged in the housing 11, the housing 11 is provided with a through hole 12 matching the outer opening 312 of the signal guide channel 31, and the outer openings 312 of two adjacent signal guide channels 31 are formed at an included angle in a length direction.

When a wireless receiver 6 is used, the outer opening 312 of the signal guide channel 31 may be vertically formed or obliquely formed or horizontally formed, and the outer opening 312 of the signal guide channel 31 is preferably formed in a middle of the lower end of the housing 11 or a front end of the housing 11. When two or more than two wireless receivers 6 are used, in this case, it is needed to control the size of the intersected extended region. If part of or all the wireless receivers face vertically downward, the intersected extended region is very small. Part of or all the wireless receivers may face vertically downward or may be horizontally arranged. But two adjacent outer openings 312 are formed at an included angle. The intersected area is reduced or avoided. In this embodiment, two signal receivers and signal guide members 3 are used, the outer openings 312 of the two signal guide channels 31 are obliquely formed, and two adjacent outer openings 312 are formed at an included angle. During use, the intersected area of two extended regions is very small or the two extended regions have a very small interval, such as within 20 cm.

Referring to FIG. 4, the included angle A is 10 degrees to 75 degrees, preferably, 20 degrees, 30 degrees, and 45 degrees.

The included angle of the outer opening may be determined according to a predetermined flight height of an unmanned aerial vehicle and a predetermined number of the wireless receivers 6. If fewer wireless receivers 6 are provided, the included angle may be set between 10 degrees and 30 degrees, and if more wireless receivers are provided, the included angle may be set between 30 degrees and 75 degrees.

Referring to FIG. 3 to FIG. 5, when two or more than two signal guide members 3 are provided, a connector 4 is connected between adjacent signal guide members 3.

By arranging the connector 4 to connect the signal guide members 3 as a whole, it is convenient to mount the signal guide members in the housing 11 of the unmanned aerial vehicle. Further, to fix the signal guide member 3 and the signal receiver conveniently, the housing 11 is provided with an auxiliary fixing member 5, the auxiliary fixing member 5 is provided with an accommodation hole 51 for accommodating the signal receiver, and an inner end of the signal guide channel 31 faces the accommodation hole 51 or stretches into the accommodation hole 51. Preferably, to further reinforce the connection, the connector 4 is provided with an extension rod 41, the auxiliary fixing member is provided with an insertion hole 52 matching the extension rod 41, and the extension rod 41 is inserted into the insertion hole 52.

The above is merely preferred embodiments of the present invention. Persons of ordinary skill will change the specific embodiments and application range based on the thought of the present invention. The content of the specification should not be understood as a limitation to the present invention.

## Claims

1. A wireless following device, **characterized by** comprising a wireless receiver and a wireless transmitter, and
further comprising a signal guide member for limiting a received signal range of the wireless receiver, wherein the signal guide member is arranged on a front side of the wireless receiver and is provided with a signal guide channel, and an inner opening of the signal guide channel faces the wireless receiver, and an outer opening of the signal guide channel faces outside;
or/and,
a transmitting terminal of the wireless transmitter is connected to a signal limiting member for limiting a wireless signal transmitting range.

2. The wireless following device according to claim 1, **characterized by** comprising at least two wireless receivers and at least two corresponding signal guide members.

3. The wireless following device according to claim 1 or 2, **characterized in that** an outer opening **of the** signal guide member is horn-shaped or inversely conical.

4. The wireless following device according to claim 1, **characterized in that** the wireless receiver is an infrared receiver; and the wireless transmitter is an infrared transmitter, the signal limiting member is a casing pipe, and the casing pipe is sleeved at the transmitting terminal.

5. An unmanned aerial vehicle, **characterized by** comprising the wireless following device according to claim 1 or 3 or 4.

6. An unmanned aerial vehicle, **characterized by** comprising the wireless following device according to claim 2.

7. The unmanned aerial vehicle according to claim 6, **characterized by** comprising a body, wherein the body comprises a housing, the wireless receiver and the signal guide member are arranged in the housing, the housing is provided with a through hole matching the outer opening of the signal guide channel, and the outer openings of two adjacent signal guide channels are arranged at an included angle in a length direction.

8. The unmanned aerial vehicle according to claim 7, **characterized in that** the included angle is 10 degrees to 75 degrees.

9. The unmanned aerial vehicle according to claim 7 or 8, **characterized in that** the housing is provided with an auxiliary fixing member, the auxiliary fixing member is provided with an accommodation hole for accommodating a signal receiver, and an inner end of the signal guide channel faces the accommodation hole or stretches into the accommodation hole.

10. The unmanned aerial vehicle according to claim 9, **characterized in that** when two or more than two signal guide members are provided, a connector is connected between adjacent signal guide members; and the connector is provided with an extension rod, the auxiliary fixing member is provided with an insertion hole matching the extension rod, and the extension rod is inserted into the insertion hole.
